(19) Europäisches Patentamt
European Patent Office
Office européen des brevets

(11) EP 1 661 425 B1

(12) **EUROPEAN PATENT SPECIFICATION**

(45) Date of publication and mention
of the grant of the patent:
**14.11.2007 Bulletin 2007/46**

(21) Application number: **03747973.0**

(22) Date of filing: **05.09.2003**

(51) Int Cl.:
**H04Q 7/38** (2006.01)

(86) International application number:
**PCT/EP2003/009880**

(87) International publication number:
**WO 2005/025260 (17.03.2005 Gazette 2005/11)**

(54) **MOBILITY MANAGEMENT IN MOBILE NETWORKS BASED ON CONTEXT INFORMATION**

MOBILITÄTSMANAGAMENT IN MOBILEN NETZEN AUF DER BASIS VON KONTEXTINFORMATIONEN

GESTION DE LA MOBILITE DANS LES RESEAUX MOBILES A BASE D'INFORMATIONS CONTEXTUELLES

(84) Designated Contracting States:
**DE GB**

(43) Date of publication of application:
**31.05.2006 Bulletin 2006/22**

(73) Proprietor: **NTT DoCoMo, Inc.**
**Tokyo (JP)**

(72) Inventors:
• **WEI, Qing**
**81735 Munich (DE)**

• **PREHOFER, Christian**
**81477 Munich (DE)**

(74) Representative: **Betten & Resch**
**Patentanwälte,**
**Theatinerstrasse 8**
**80333 München (DE)**

(56) References cited:
**EP-A- 1 217 792      EP-A- 1 217 860**
**US-A1- 2002 028 683      US-A1- 2003 063 072**

**Description**

FIELD OF THE INVENTION

The present invention relates to mobility management in mobile networks based on context information. In particular, it relates to making a decision on a network service in a mobile environment based on context information.

BACKGROUND OF THE INVENTION

In future networks context awareness will be provided to a user. Based on context awareness it becomes possible to adapt decisions to be made in a network to a changing context or a changing environment. Thereby it becomes possible to improve the level of services provided to the user.

Context awareness will be particularly important for the next generation (4G) mobile networks. These networks will include heterogeneous (sub-)networks and will provide services in such networks in a seamless manner. For that purpose network service decisions which are to be made on services like "which service", "which access point", "which (sub-)network, should be able to take into account context information.

In order to provide such a context awareness the context information based on which the network service decision is to be made has to be managed. This means that the context information which may include information from different locations has to be collected. Since the collection may happen at a location different from where the final decision based on the context information is made, there also may have to be some exchange of contact information. Finally, the collected context information has to be processed or evaluated.

There have been suggestions to use fuzzy logic in order to cope with the complexity of the information said retrieved from heterogeneous mobile access networks, for example in P. Chan et al., "Mobility management incorporating fuzzy logic of a heterogeneous IP environment", IEEE Communications Magazine, December 2001. Therein there is disclosed an algorithm for a hand-over procedure and how to apply fuzzy logic to this problem.

Michel Kounavis and Andrew Campbell, "Design, implementation and evaluation of programmable handoff", ACM Journal of Mobile Networks and Applications 6, vol. 6, no. 5, September 2001, discloses a framework for a programmable handover, However, it does not relate to the inclusion of context information.

In view of these circumstances, it is desirable to carry out the management of the context information in a flexible and efficient manner which can appropriately adapt to changing environments.

EP A 1217860 discloses a device for context-based data logging, monitoring and reminding, capable of processing user-specified data and making context-based decisions to guide the user so as to carry out important work/tasks at a given moment. Data to be processed are stored in an activity log in the reminder.

US 2002/0028683 discloses a mobile telephoning device and a process enabling access to a context-sensitive service using the position and/or identity of the user. An access interface (Bai) allows access to a context-sensitive service to a user portable set (Ui) according to a chosen geographical coverage. A mobile station (SMi) distributed in the access interface area of coverage is equipped with communication means to establish short-range radio frequency communication within the chosen perimeter. The user portable set (Ui) is equipped with short-range radio frequency communication means paired with those of the mobile station to establish the said short-range radio frequency communication within the chosen perimeter. The user portable set (Ui) communicates with the mobile station (SMi) and the access interface (Bai) to access the said context-sensitive service (Si) which is adapted according to the position and/or identity of the user.

SUMMARY OF THE INVENTION

The present invention is defined in the independent claims. The dependent claims define particular embodiments of the invention.

According to a preferred embodiment there is provided a method for making a context-based decision on a service in a mobile network, said method comprising:

collecting context information which is distributed over separate locations in said mobile network;
composing a context data structure including context information for reaching a decision on said service based on the evaluation of said context data structure, wherein said context data structure is minimized.

By composing collected context information into a context data structure which is minimized it is possible to adaptively and efficiently manage the context handling, according to changing environments.

According to a preferred embodiment said context data structure takes the form of a matrix, said the method comprising:composing said matrix in a minimized form an/or or minimizing said matrix after having initially composed said matrix. The use of a matrix structure is particularly suitable for processing the context information due to its defined structure which can be easy handled in terms of calculation and evaluation.

According to a preferred embodiment said minimization of said context data structure includes: deciding which context information pieces are relevant for reaching the decision based on initial context information to include only the relevant context information pieces in composing said context data structure, and/or

excluding dynamic context information when composing said context data structure.

Including only relevant context information and excluding dynamic context information when composing the context data structure both lead to a minimized context data structure thereby obtaining an efficient handling of the context information in a changing environment.

According to a preferred embodiment said minimization of said context data structure comprises:deciding based on initial context information which access points among the plurality of access points in said mobile network should be considered as prospective access points;including only those elements into the context data structure which correspond to the access points which should be considered based on said decision.

By limiting the number of prospective access points included into the context data structure a minimization of the data structure is achieved hereby reducing transmission and calculation needs in a distributed environment.

According to a preferred embodiment only those elements which correspond to access points of neighboring cells adjacent to the present cell in which the mobile terminal is currently located are considered as relevant and included into the context data structure. Including only neighboring access points limits the context data structure to "realistic" access points.

According to a preferred embodiment said minimization of said context data structure comprises:deciding based on service-related context information which services in said mobile network should be considered as relevant; and including only those elements into the context data structure which correspond to the services which should be considered as relevant based on said decision. This obtains also a minimized context data structure for the efficient context data handling.

According to a preferred embodiment said minimization of said context data structure comprises:partly evaluating said context data structure based on available

static context information. Partly evaluation is another way of achieving a minimized context data structure for obtaining an efficient context data handling.

According to a preferred embodiment there is excluded dynamic context information when initially composing said context data structure based on static context information; and said dynamic context information is included into said context data structure after said static context information. This keeps dynamic context information up to date

According to a preferred embodiment said mobile environment includes a context server, a plurality of context repositories, and a plurality of mobile nodes as context clients; said context server collects said context information from said context repositories and composes said context evaluation matrix; said context data structure is transmitted from said context server to one of said context clients for evaluation. Such a framework provides an efficient and flexible approach for context handling in a distributed environment.

According to a preferred embodiment said context data structure is transmitted from a first location to a second location, and dynamic context information is transmitted separately from said context data structure. This also reduces the necessary traffic while keeping the dynamic context information up to date.

According to a preferred embodiment the context information includes static information and dynamic information from the mobile terminal and the network, and;

said context data structure is initially composed based on static context information, and dynamic context information from said network side is inserted after said having initially composed said context data structure; and dynamic information from said mobile terminal is finally inserted into said context data structure just before evaluation of said context data structure. This provides the context information just in time, to thereby minimize the likelihood that the dynamic context information will be out of date.

According to a preferred embodiment for those context information elements which are not available when composing the context data structure, default values are used for composing the context data structure. This takes into account the possibility that at certain moments some necessary information may be not available.

According to a preferred embodiment when composing said context data structure, one or more of the values of the elements included into the context data structure are chosen variably depending on a set of rules. This gives high flexibility to the context based decision procedure.

According to a preferred embodiment the composition of the context data structure is updated on request or if the context changes. This enables to adapt to a changing environment. Depending on the network policy and the circumstances either option is preferable. Continuously updating the dynamic context information makes sure that continuously there is the most recent dynamic context information available. The corresponding necessary traffic can be reduced by updating the dynamic context information only on request just before the evaluation of the equations.

According to a preferred embodiment said context information relates to one or more of the following: user profile; user history; network location and/or network topology; network capabilities; network services; charging models; potential next access points;location information; location prediction.

According to a preferred embodiment there is provided an apparatus for making a context-based decision on a service in a mobile network, said apparatus comprising: a collector component for collecting context information which is distributed over separate locations in said mobile network; a composing component for composing a context data structure including context information for reaching a decision on said service based on the evaluation of said context data structure, wherein said context data structure is minimized based on initial context information or based on the time when said context data structure is composed

The apparatus may be a server which is in contact with other elements of the network, in particular the context repositories. By having installed thereupon suitable software and hardware it may also implement the other functionalities explained in connection with embodiments of the invention.

According to a preferred embodiment there is provided a mobile terminal for a mobile network, said mobile terminal comprising: a reception component for receiving a context data structure which has been composed by an apparatus as defined in connection with embodiments of the invention, a calculation component for evaluating the context data structure which has been received from said apparatus to select one of said options.

The mobile terminal may according to preferred embodiments have installed thereupon suitable software and hardware to conduct the further functionalities described in connection with embodiments of the invention.

The mobile terminal may for example be a computer, a mobile phone, a PDA (personal digital assistant), or anything alike which may be connected through a wireless think to a mobile network.

According to a further embodiment here is provided a computer program comprising program code which when being executed on a computer enables said computer to carry out a method according to one of the embodiments of the invention. Such a computer program may be located in a mobile terminal, or a context server, or it may be distributed over components of a mobile network.

According to a further embodiment there is provided a data structure which has been obtained by carrying out a method according to one of the embodiments of the present invention.

The present invention will now be further described in more detail by referring to the accompanying drawings.

BRIEF DESCRIPTION OF THE DRAWINGS

Fig. 1 schematically illustrates the types of context information used in connection with embodiments of the present invention.

Fig. 2 schematically illustrates the components of a mobile environment to which embodiments of the present invention may be applied.

Fig. 3 schematically illustrates a flowchart of a method according to an embodiment of the present invention.

Fig. 4 schematically illustrates a flowchart of a further method according to an embodiment of the present invention.

Fig. 5 schematically illustrates a flowchart of a further method according to an embodiment of the present invention.

DETAILED DESCRIPTION

The embodiments described hereinafter relate to the provision of "context awareness" which means the ability of a particular service to adapt itself to a changing context.

Before the management of the context information according to embodiments of the present invention will be described in detail, at first the terminology used hereinafter will be explained.

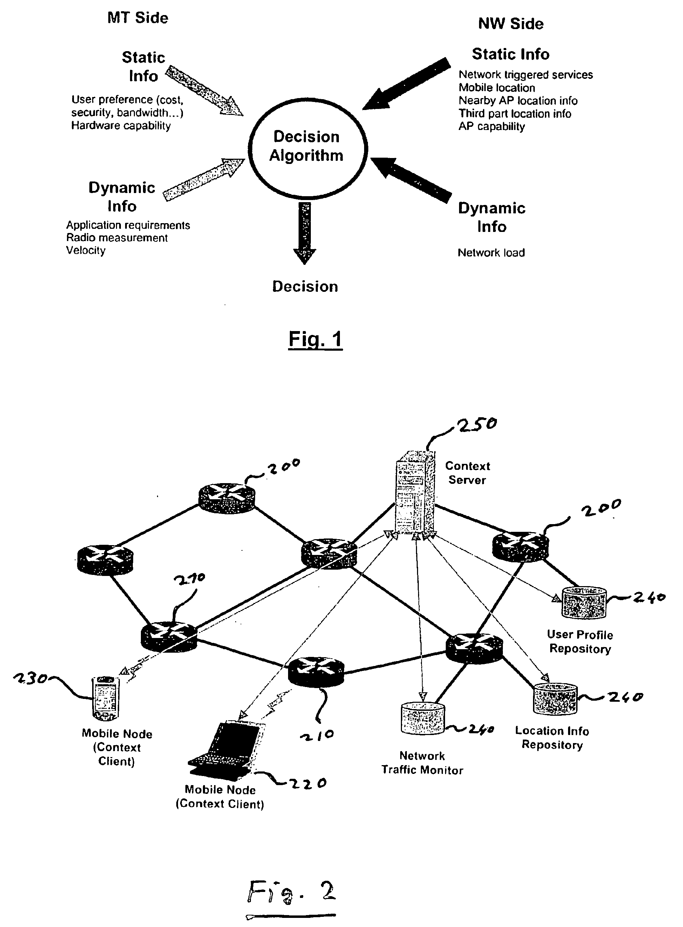

The context information consists of individual pieces or elements of context information, and they describe or define (in part or as a whole) the present status of the network, its components such as mobile nodes or access points, and its users. The context information may partly be located within the mobile nodes, and it may partly be located on the network side. One can distinguish four types of context information, as is schematically illustrated in Fig. 1.

1. Static context information located on the network side (e.g., User profile & history, network location or network topology, network capabilities & services, charging models). There is also some context information which is static with respect to a cell (e.g., potential next access points), here this is also considered to be as static context information. The user profile may for example contain any data which is specific to the user, such as a pool of services to which the user is entitled. The user history may contain information about the history of the services which the user has been made use of, and further it may also contain information about for example previous locations of the user. The network location or network topology information may contain information about the configuration of the network in terms of location, such as the location of access points, the location of neighboring access points for a certain access point, or the like. The network capabilities and services information may contain information about which services can be provided by the network, which quality of services is available (e.g. bandwidth etc.) and the like. Furthermore, the charging models may contain charging information which contains information about how much money is charged for certain services and certain times and possibly also with respect to certain users.

2. Dynamic context information located on the network side (e.g., network status, network load).

3. Static context information located in the mobile node (e.g., user settings & profile, application settings, hardware capability of the terminal, supported services, etc.). There is also some context information which is static with respect to a cell (e.g., current location). Here we also consider this to be static context information. The user settings and the user profile has static context information located in the mobile mode may for example contain information about which criteria (such as costs, quality of service, kind of service) are preferred by a user for basing then thereupon a context-aware decision. The user profile may contain general information with respect to this certain user which customizes the mobile node to the certain user. Application settings may contain information about which applications are available and can be provided by the mobile node. The hardware capability of the terminal may define for example the quality of services (such as bandwidth) which can be provided by the mobile node. Finally, the supported services (which services are supported by the mobile node, which are not) also may be regarded as static context information located in the mobile node.

4. Dynamic context information located in the mobile node (e.g., currently required or operated service(s), radio measurement (field strength), device status (battery, interface status, etc.))

As is schematically illustrated in Fig. 1, the context information is collected and fed to some kind of decision algorithm which evaluates the collected context information, and based on this decision algorithm then finally the decision on a service in the network is reached. The procedure of the collection and evaluation of the context information will be described in the following in more detail in connection with embodiments of the invention.

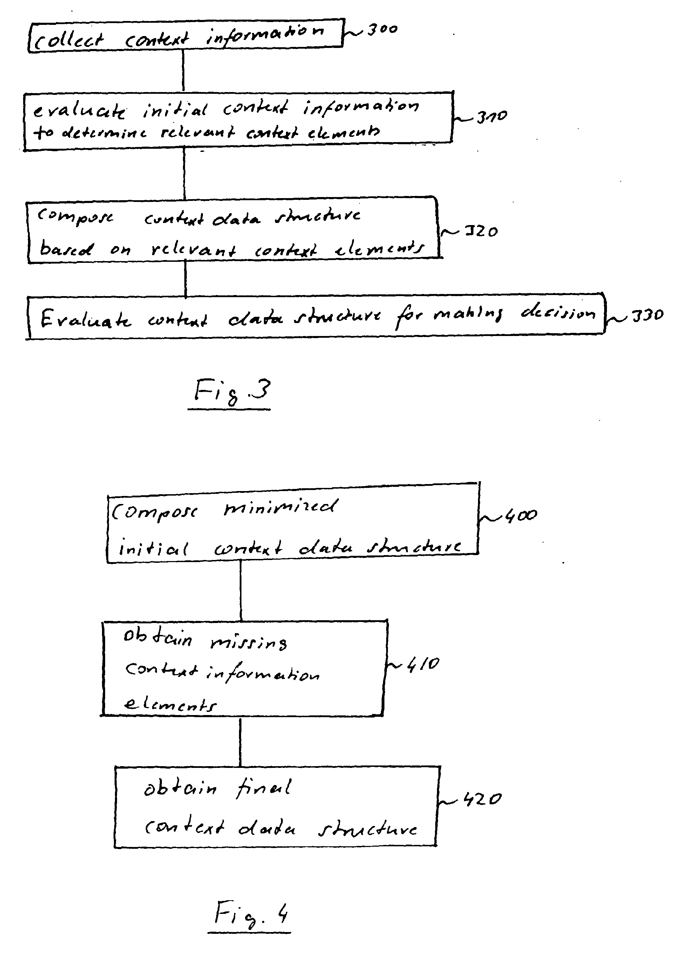

Referring to Fig. 2 now a mobile environment to which embodiments of the present invention may be applied will be explained. Fig. 2 shows a network which comprises network nodes such as Routers 200 and access routers 210 (Access points) to which mobile nodes 220 and 230 may connect. Mobile nodes 220 and 230 may be mobile phones, notebooks or laptops, PDAs, or anything alike.

The network further comprises various context repositories 240, which are distributed in the network and store various context information. They may include a traffic monitor which stores information about the present network traffic or network load, and it may comprise a location information repository which stores information about the present location of the mobile nodes. It may further comprise location prediction information containing information about the likelihood into which direction (to which access node) a mobile node moves or is likely to move.

A context server 250 which is located in the network may collect relevant context information from the context repositories 240. It also may prepare the compilation of context information into a context data structure such as a context evaluation matrix which may then be evaluated to evaluate the context information, as will be described in more detail below. The mobile nodes may be considered to be context clients requesting from the context server the equations to be evaluated for taking a decision.

Fig. 3 illustrates a simple example of a procedure according to an embodiment of the invention. In operation 300 the context information is collected. The context information is collected from different locations in the network, such as from the mobile terminal, from context repositories, and the like.

Then a context data structure is to be composed which takes a reduced or minimized form. This can be e.g. done by including only certain elements in the context data while other elements, e.g. such which at a given present context (in a certain given situation) are not considered to be relevant, are not included. The resulting context data structure will give the base for making a network decision which takes into account context information, thereby making it a context-aware decision.

For making the decision which context information elements are to be included and which are not in operation 310 initial context information is evaluated. The initial context information may be the context information which has been collected in operation 310. The initial context information may for example be static context information from the mobile terminal as well as static context information from the network side. This initial context information is collected by a context server and then a set of rules is applied in order to decide which context information elements are to be included into the context data structure which is to be composed. Thereby it may happen that the initial context information which is used for applying the set of rules is only a part of the context information which has been collected in step 300. If. e. g. the context server of Fig. 2 continuously collects a great variety of context information, then (depending on said set of rules) only a part of this collected context information may be used as initial context information which needs evaluation to determine the relevant context information elements for composing the context data structure. The initial context information may e.g. be static context information from the mobile terminal and/or the network.

By including only the "relevant" context information which was determined by the evaluation in operation 310 there is composed a "minimized" or "reduced" context data structure which does not include all context information which might in principle be available (e.g. all context information which the context sever collects), but only the one which is relevant under given circumstances, while the given circumstances may be taken from the evaluation of initial context information.

Thereby in operation 320 there is composed a "minimized" or reduced context data structure which includes only relevant context information as it was determined in operation 320.

In operation 330 then the thus composed context data structure is evaluated in order to make a decision on a network service. This evaluation is based on the contents of said data structure, preferably in accordance with some predefined rules how to mathematically connect the elements contained in the data structure for its evaluation.

If the context data structure once it has been composed contains already all the values which are necessary for its evaluation, then it may already be evaluated, e.g. by calculating one or more result values based on the data contained in the context data structure. Based on these result value(s) then the decision may be made.

In order to carry out the evaluation of the context data structure it must be known how to mathematically connect the elements contained in the context data structure for evaluating it. This can be e.g. known by convention or by predefined rules which define how to mathematically operate on the elements in the data structure for evaluating it. If the values contained in the context data structure are already known once it has been composed, then the evaluation can be carried out.

As mentioned, the mathematical operations which connect the elements in the context data structure may be predefined. For example, the context data structure may represent a set of equations, each equation representing a certain decision, and each equation having the (predefined) form:

$$R = \sum_{k=1}^{K} C_k \cdot X_k + M$$

In this equation $X_k$ may be parameters (context information elements) which are considered relevant and are to be included into the equation. Based on the set of rules selecting relevant parameters, it is decided which elements $X_k$ are to be included in the equation. For the thus selected parameters $X_k$ then the coefficients $C_k$ may be selected. For this selection also a (separate) set of rules may be applied which decides on the values of these coefficients. They may for example depend on the parameter $X_k$, they may however also or alternatively depend on the user settings which may decide how a certain parameter $X_k$ is weighted by the corresponding coefficient $C_k$. The final summation element M may be some other certain context information element to be included into the equation.

This equation may be "implicitly" composed once the parameters $X_k$, the coefficients $C_k$ and the constant M have been selected based on the initial context information. In other words, the predefined equation given above defines how a context data structure which contains parameters $X_k$, coefficients $C_k$ and constant values M are to be evaluated, namely by applying this formula to operate on the selected parameters $X_k$, coefficients , $C_k$ and constant M to calculate a result value R. Such a result value R is then calculated for each possible option, and then based on the result values R it is decided which option (the one with the highest result value R) is to be chosen.

Based on the foregoing it may therefore be said that operation 320 in which the context data structure is composed also (either implicitly or explicitly) contains the composition of one or more equations how to evaluate the context data structure. This composition of one or more equations may follow predefined rules as in the foregoing example, however, also more complicated ways of composing the equations could be imagined. For example, the composition of the equations may not be predefined as a summation of parameters and coefficients multiplied therewith, but rather the equations may take more complex forms depending on an evaluation of the initial parameters and the application of a corresponding set of rules.

It may further happen that one or more values of the context information elements (parameters $X_k$, or coefficients $C_k$, or constant M) in the context data structure are not yet known when composing the context data structure. This may e.g. happen if the context data structure does include not only static context information but also dynamic context information which may change over time, such as network load, services under operation, or the like. According to one embodiment such context information like dynamic context information is not yet included into the context data structure when it is composed but rather is included at a later stage, e.g. when the decision is to be taken or when the dynamic information is available.

In this case the initially composed context data structure also is "minimized" based on the given circumstances, namely by excluding dynamic context information (certain parameters or coefficients). Based on the time of composition of the context data structure, namely when composing only the initial context data structure which does not yet include the dynamic context data structure, the thus composed context data structure also is "minimized" or "composed in a reduced form". While the (full) composition of the context data structure would include more context information, namely also the dynamic context information, this dynamic context information is not already included when initially composing the (minimized or reduced) context data structure.

It should be mentioned here that the term "composing the context data structure" here is used in a twofold manner. On the one hand the composition of the context data structure includes the selection of the context information elements which actually are considered as relevant and which must be included for making the context-aware decision. In the foregoing example these context elements are the parameters $X_k$, the coefficients $C_k$, and the constant value M. This selection may be regarded as the selection of "variables", namely the context information elements, which are to be included into the context data structure. On the other hand the term "composition" also relates to the already described (mathematical) connection between these variables in order to evaluate the context data structure, as e.g. edefined by the equations as mentioned before. Once the relevant context parameters have been selected and the equations as mentioned before have been composed, they may be "finalized" by replacing the variables in the equations by their actual values. This may be regarded as the final step of composing the equations (or the context data structure representing the equations).

However, it should be noted that this selection of "relevant" context information and the corresponding data structure may be "void" or "empty" if some of the values which are to be included into the context data structure are dynamic context information and therefore are collected and inserted into the initial context data structure to then form the final context data structure later.

The dynamic context information elements may then be included into the initial context data structure e.g. in two ways. One possibility is that the initial context data structure contained some element which initially was not known and therefore first assumed a default value, and then once the missing dynamic context information is available is filled into the (initial) context data structure by replacing this default value. This means that for example a parameter or a coefficient in the context data structure or its corresponding equation may be replaced by a default value.

Another possibility is that the missing dynamic context information element(s) is combined with an already prepared initially composed context data structure according to some (mathematical) rule or recipe, and based on this combination the final context data structure is obtained.

The foregoing procedure is schematically illustrated in Figure 4. In operation 400 a minimized (initial) context data structure is composed. It is "minimized" or reduced because it does not yet include all necessary information but some information like e.g. dynamic context information is still missing. This may for example mean that a parameter $X_k$ or a coefficient $C_k$ is not yet included into the context data structure representing the set of equations. Rather this missing parameter or coefficient will be inserted into the context data structure later. It is clear that for that purpose it must be defined by some definition that in the initially composed data structure some elements are missing and how they are later to be retrieved and to be inserted into the initially composed data structure to compose the final context data structure.

In operation 410 the missing context information element or elements are obtained (e.g. from the context repository or any other location) and then based on the obtained missing information and the initially composed context data structure there is composed a final context data structure.

The data structure may then be finally evaluated based on the values it contains and further based on some recipe or procedure how to mathematically connect these values to obtain a result. This recipe or procedure can (as it was described before) be predefined, it may, however, also include some flexibility such that e.g. also the context data structure at least partly and either implicitly or explicitly (by some of its elements) defines the rules how the context data structure is to be evaluated.

The context data structure may for example take the form of a matrix which represents a set of equations, each equation being representative of a certain decision or option which may be taken. The predefined rule then may define the procedure how to compose the equations to be evaluated based on the values contained in the matrix, in other words, the predefined rule defines how to mathematically connect the individual values contained in the matrix to evaluate the equations represented by the matrix.

As has been already mentioned before, the composition of the context data structure may lead to an "initial context data structure" in which some values of context information are not yet included. However, depending on the circumstances the initial context data structure may include enough context information elements so that at least a partly evaluation of the initial context data structure is possible. Based on the already available context information the initial context data structure according to one embodiment may therefore be partly evaluated and thereby "minimized" by calculation the result of the mathematical operation between those context information elements for which their values are already available. This partly evaluation reduces or "minimizes" the context information elements contained in the context data structure.

The content of the context data structure may take the form of a matrix which represents a set of equations which is based on the collected context information in the network (context repositories) and the (initial) context information from the mobile context clients. (It can also incorporate some security policies, e.g., different users may have different limits of authority to get the context information, and some context information is only available for authenticated and authorized users.)

The mobile context client(s) (e.g., mobile terminals or mobile nodes) 220 and 230 may in one embodiment be responsible for the evaluation of the context information. It then evaluates the context data structure which is composed based on the context information. In this embodiment, because the context data structure needs to be transmitted from the context server where it is composed to the context client (where it is evaluated) the minimization of the context data structure is particularly advantageous because it reduces the necessary traffic.

As mentioned, the selection of relevant context information is carried out based on initial context information. This initial context information may e.g. include static context information from the mobile terminal. This initial context information is sent to the context server. It may e. g. include information about the services available at the mobile node, the settings and preferences of the user, some security policies (e.g. different users may have different access rights to services and also context information), etceteras. The context server then retrieves or has already retrieved context information from the network, e.g. the services available, charging information, location information about the local arrangement of the network (location of access points, neighboring access points, etc). Based on this (initial) context information which in this embodiment is static context information a decision is made about the relevant parameters which are to be included into the context data structure. This decision is made based on a set of rules which may be set or predefined in the system, e.g. in the context server. The rules which context elements are to be included may change depending on the circumstances, depending on the operator of the network, depending on the available context information, or he like. Later in the description examples will given for such rules, but such the rules may change depending on the network and the policy implemented therein.

According to one particular embodiment, however, not only the selection of which elements are to be included into the context data structure depend on (initial) context information, but also the values which are assumed by the context information elements included into the context data structure may depend on other elements of the context data structure. This may also be implemented by corresponding rules such as "if element x is "1" then element y is "0", or the like.

It should be generally mentioned here that the context data structure composed based on initial context information expresses and represents the feasibility or the expected quality of an option such as e.g. a certain user service or a certain access point to be chosen. This means that the context data structure actually is - together with the corresponding rules how to evaluate the context data structure to actually get a result based on which the decision is to be made - a framework for making a certain decision depending on a changing environment and adapting and taking into account certain criteria which themselves also may change.

This adaptive character is in one aspect for example represented in the data structure consisting of a linear summation of parameters and their coefficients by taking into account user preferences based on which the values of the individual coefficients are chosen. If the user preferences are such that a certain parameter is to be weighted higher, then the corresponding weighting coefficient chosen is to be set higher according to the user preferences. This may e.g. also relate to the weighting of a parameter which for example represents the costs of a service.

However, not only user preferences may be taken into account but also operator preferences which are set such as to utilize the network in a better or more efficient way. For example, an operator may prefer that such access points are chosen for which at present the network is less high. In that case one parameter may be the network load of a certain access point, and if the network load is a very important parameter for the operator, then the weighting coefficient giving weight to this parameter will be set high.

This means that for a context data structure representing a linear summation of products of parameters and coefficients higher values for the coefficients indicate higher preferences. By chosing the values of the coefficients suitably, the whole framework may adapt to changing requirements depending on the operators, the users, or other factors which may influence the whole decision. The actual selection of the concrete values for coefficients and the parameters depends on the overall requirements of the users, the operators, and so on, and they therefore may be suitably chosen according to the circumstances.

It should further be noted that there may be some cases where the linear approach in which parameters multiplied with coefficients and added up linearly does not give a suitable solution. For example, it may be necessary or desirable that the radio quality is above a certain threshold. Then the weighting coefficient weighting the radio quality may be set to zero if the parameter reflecting the radio quality is below the threshold. For that purpose a certain rule may be implemented and applied to the evaluation of the initial context information. Instead of setting only the weithing coefficient of the radio quality to zero, also the whole equation may be set to zero if a very important parameter does not lie beyond a certain threshold.

In addition to such rules also non-linear coefficients may be applied. E.g. the preference with respect to the costs may go down non-linearly if the price goes up linearly. Such a dependency of the coefficient on a certain parameter may also be implemented by applying a corresponding rule when evaluating the initial context information to compose the context data structure.

Furthermore, it may happen that there is some conflict between preferences and capabilities. It may for example happen that the coefficients depend on each other. For instance, a user usually prefers the cheapest offer. Accordingly the weighting coefficient $C_k$ for the costs parameter $X_k$ should be set high. However, if the user talks to his office, he may always prefer the best quality. This may be insured by applying an extra rule which expresses such a non-linear dependency.

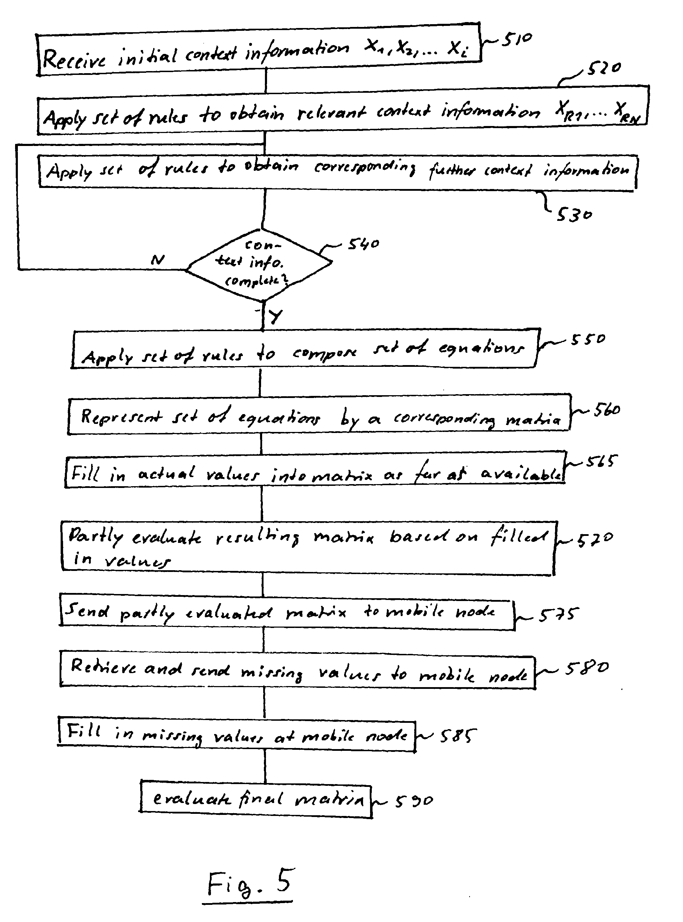

Referring to Fig. 5 there will now be described a specific embodiment according to the present invention. In this embodiment of the present invention the network service decision to be taken based on context information is the selection of a prospective access point which is most suitable for the services a mobile node may use. This is also often called a "hand-over", i.e. if a mobile node changes its location from one cell to another, then it has to be "handed over" from one cell having a certain access point to another cell having another access point. The embodiment relates to an network architecture as it is schematically illustrated in Fig. 2.

In operation 510 initial context information $X_1$, $X_2$, ..., $X_i$ is received by the context server. This initial context information is fed to a set of rules to obtain in operation 520 relevant context information pieces $X_{R1}$ ... $X_{Rn}$. This are for example the parameters mentioned in the embodiments described before. However, this selection of relevant context information may not be sufficient to complete the context data structure because further context information based on these relevant context information pieces may be necessary to complete the context data structure. This may for example be the coefficients of the parameters of the embodiments described before.

In order to obtain this further context information in operation 530 another (or further) set of rules is applied to the found relevant context information $X_{R1}$ ... $X_{Rn}$ to thereby find corresponding further context information which is necessary to complete the context data structure. This may e.g. be the coefficients of the parameters which have been found in operation 520.

In operation 540 it may then be checked whether all context information necessary to compose the context data structure has been obtained. If no, then further rules may be applied to obtain the missing context information. If in operation 540 it is decided that the context information is complete, then in operation 550 a set of rules may be applied to compose a set of equations based on the obtained context information. This set of rules may be predefined or it may depend on the context information which has been obtained to compose the context data structure. With the set of equations composed in equation 550 the obtained context information could in principle be evaluated to make a decision.

In operation 560 the set of equations is represented by a corresponding matrix. This matrix may be regarded as a context data structure representing the set of equations, and it may for example be transmitted to another location and be evaluated there by retrieving the actual set of equations based on the matrix.

In operation 565 then the actual values of the context information pieces contained in the matrix are filled into the matrix, at least as far as they are available. Some values may be not available because the corresponding context repository does not deliver them, other values may be not included because it is preferable to include them later, such as in case of dynamic context information which should be kept up to date.

The matrix into which the values have been filled in may then in operation 570 be partly evaluated as far as it is possible based on the values which have already been filled in. This may reduce the size of the matrix which then later is to be transmitted to another location.

In operation 575 then the partly evaluated matrix is sent to another location, here to the mobile node.

In operation 580 then the missing values which have not yet been inserted into the context data structure are retrieved. These are for example the dynamic context information which are retrieved by the context server from the repositories and then sent to the mobile node.

In operation 585 they are then filled into the partly evaluated matrix at the mobile node. This may relate to dynamic context information coming from the matrix side (from the context server), it may, however, also relate to dynamic context information from the mobile node itself.

In operation 590 then the thus completed final matrix is evaluated. This means that the result values for the corresponding set of equations will be calculated, and based on the result values the network decision will be made.

In the following a more concrete example for this procedure will be described in connection with a further embodiment. In this embodiment the context data structure is a set of equations (represented by a matrix) where each equation corresponds to one possible option which might be chosen. Here each individual equation corresponds to a certain access point which could be selected as a prospective access point for the mobile mode. Such a set of equations might look as follows:

$$AP1 = S1*( (C1\_1*P1+C2*P2)*Service1 + (C3\_1 *P3 + …) * Service2 +……. )$$

$$AP2 = S2 *( (C1\_2*P1+C2*P2)*Service1 + (C3\_2 *P3 + …) * Service2 +……. )$$

In this set of equations, AP1, AP2... are the access points which might be selected. Each AP is evaluated by calculating some number (or rank) which reflects the user and network preferences and possibly also the status of the network and/or its components (the relevant context information). The access point for which the highest value is obtained is chosen as prospective access point.

The equations contain a variety of context information pieces. Service 1, service2 ... are context information pieces which correspond to the services which are both supported by the network and the mobile node. This means that the set of rules based on which the relevant context information is selected contains a rule that service-relate context information which includes information on which services are available are to be evaluated for the mobile terminal and for the network. Then according to this rule only for those services where this evaluation concluded that the services are available in the network and in the mobile terminal corresponding context information elements are included into the context data structure. In the present embodiment this is done by setting the service parameters Service1, Service2, etc. either to 0 or to 1, depending whether the corresponding service is available in both the network and the mobile terminal.

In addition to these context information pieces, there are several kinds of parameters P1, P2, P3,.. which also are context information elements. In case of these parameters assuming high values the corresponding equations are higher valued which corresponds to a higher preference for the corresponding decision (or access point).

- P1, P2... are parameters which will affect the decision. For example, P1 can be the currently available bandwidth of different access points (APs), P2 can be the preference number based on the movement prediction of the mobile node (which can e.g. be obtained from some movement prediction repository), P3 could be the signal strength of different APs. There my be a further parameter P4 representing service charge information. For instance, services charges can be high in a network of one AP, hence the cost parameter P4 will be low. Consequently this AP will be ranked less than others as far as the service charge parameter P4 is concerned, taking into account also other parameters may change the final ranking of this AP.

- Further context information pieces are C1_1, C2... They are the coefficients of different parameters. These can be service specific (e.g. user preference) or service and operator specific (e.g. pricing). These coefficients are the weight of the different parameters.

- S1, S2, ... are coefficients which are service independent and concern only the AP, e.g. the give preferences to certain access points (or preferred corresponding operators)

The composition of the equations shown above - as well as the collection of the corresponding context information - in this embodiment is based on initial context information. This initial context information here is the static context information which is transmitted from the mobile node to the context server. Based on this static context information and by making reference to a set of rules stored in the context server the context server decides how to compose the individual equations and which context information pieces need to be collected to compose these equations. Once the equations are complete they may be evaluated to finally make the decision which AP is to be selected. This can either be done in the context server or - according to a further embodiment - it may be done in the mobile node, as will be explained later in more detail.

The procedure of context collection and evaluation will now be described in somewhat more detail in connection with a further embodiment of the present invention. This embodiment also relates to the selection of a prospective access point for a mobile node.

The procedure for context collecting and evaluation in this embodiment is as follows:

1. Send request with initial context information

The mobile node sends a request to the context server to ask for a set of equations which then are to be evaluated. This request includes the static context from the mobile node, e.g., supported services, user profile, user preference. Similar to the aforementioned embodiment, this static context information can be regarded as "initial context information" based on which the further processing is carried out.

2. Collect relevant context information

Based on the received static context information (the initial context information), the context server collects the relevant context information in the network from various context repositories. Thereby it is preferable if - in view of the vast amount of context information which is potentially available - the collected context information is limited to "relevant" context information. According to this embodiment, the "relevant context information" is only the context information which is related to or relevant to the context client's (the mobile node's) supported services. For example context information related to the pricing of services which are not supported by the mobile node (e.g. video or the like, depending on the mobile node) needs not to be collected because it is not relevant. By selecting only the "relevant" context information pieces and composing them into a set of equations the finally resulting set of equations in some sense is "minimized" because the number of operands and calculation steps in said set of equations is limited to those which are relevant.
It should be mentioned here that the selection of relevant context information also means that only such context information will be considered relevant which actually is available. If some context information which might in principle be included into the context data structure is not available (e.g. because the corresponding repository is shut down or unavailable) then it will not be considered as relevant. Alternatively a default value may be used for such context information which is not available.

3. Compose set of equations

The context server composes a set of equations to be evaluated. Instead of or representing the set of equations a context data structure may be composed. When composing the set of equations (or the context data structure representing it) this is done such that the resulting set of equations is limited to those operands and parameters which actually are relevant in the given context. This may consist of the following steps:

a) Compose the set of equations. For example, in case of context-aware handover, the set of equations can be as follows:

$$AP1 = S1 * ( (C1*P1+C2*P2)*Service1 + (C3*P3 + ...) * Service2 +....... )$$

$$AP2 = S2 * ( (C1*P1+C2*P2)*Service1 + (C3*P3 + ...) * Service2 +....... )$$

Here each equation corresponds to one possible access point which could be selected. In this set of equations to be evaluated, only the potential access points AP1, AP2... are included based on information about the mobile node's current position. Thereby the set of equations is "minimized" in the sense that the total number of equations which are composed and are then to be evaluated is limited. For that purpose e.g. it is first determined where (in which cell) the mobile terminal is presently located. Based on this information reference is made to a context repository which based on the present cell determines the neighboring cells. Only those neighboring cells or their corresponding access points actually may be chosen as realistic prospective access points. Therefore it is sufficient when composing the set of equations to limit this set to only those equations which correspond to such actually realistic prospective access points. Thereby the set of equations (the context data structure) as given above is limited or "minimized" in the vertical dimension (i.e. the number of equations is minimized). For the described minimization reference is made to location information which gives information about the possible prospective access points (such as neighboring access points) based on the current location of the mobile node.
Based on this "initial" context information then the possible prospective access points and thereby the number of equations to be evaluated is determined as a set of "further context information pieces" which have been selected based on the initial context information. The determination of prospective access points to be included into the set of equations may also be based on other or additional "initial" context information, not only on neighboring access points. E.g. as an additional constraint a certain security policy may determine that certain access points are only accessible to authorized users, they will then only be included in the set of equations if the user has the corresponding authorization. Or it might be possible that based on movement information obtained from a movement prediction server it can be concluded that a certain access point is not a realistic prospective access point and will therefore be excluded. However, this should only be done if the movement prediction r is reliable enough. Or if e.g. the additional context information is that the user is sitting in a train moving in a certain direction, then this information may be used to exclude such access points which lie in directions opposite to the movement of the train, even if they are neihboring access points..

In addition to (or alternatively to) the minimization in the vertical dimension a minimization in the horizontal dimension can be carried out when composing the set of equations (the context data structure). For that purpose only those context information pieces defining the presence or absence of a certain service (Service1, Service2, Service3, ...) are included which are both supported by the network and the mobile node. In this way, the (initial) context information defining the available services is used in order to minimize the set of equations to be composed in the horizontal direction. For those services which are not available in both the network and the mobile node the context information pieces defining the availability of a certain service (Service1, Service2, Service3, etc.) are set to "0". Thereby in the set of equations shown above those summation elements which relate to services not available in both the mobile node and the network are not included, thereby minimizing the set of equations in the horizontal dimension.

With the aforementioned way of minimizing the set of equations in the vertical and the horizontal dimension there is achieved a flexible composition of the set of equations to be evaluated. Moreover, if the final evaluation and the composition of the equations are carried out at different locations, e.g. the composition of the equations being carried out at a context server and their evaluation being carried out at the mobile node, thereby making it necessary to transmit the composed equations from the context server to the mobile node, then the minimization of the set of equations as described before reduces the necessary traffic between the context server and the mobile node.

b) In addition to the just described determination of services and access points which are to be included into the set of equations, it has further to be decided which parameters (P1, P2, etc.) are to be used and furthermore the value of the coefficients (C1, C2, etc.) also needs to be determined to compose the set of equations. Thereby this determination in the present embodiment depends on the static context information from the network and the mobile node (e.g., user settings, charging models, user profile & history...). To carry out this determination the static context information - if not already available - at first is collected, e.g. by referring to suitable context repositories. Once the static context information is available, reference is made to a set of rules which - based on the mentioned static context information as an input - defines the values of the parameters (P1, P2,..) to be included and the Coefficients (C1, C2,...).

c) Once the set of equations is composed and the known values of the parameters which can be drawn from the static context information in the network have been filled into the set of equations, the context server then evaluates the resulting set of equations as far as possible.

4. Send partly evaluated equations

The context server then sends the partly evaluated set of equations to the mobile node. If the set of equations takes the form as shown above, then the partly evaluated set of equations will have the form

$$AP = (C1^*X1 + C2^*X2... + k)^*Service1 + (Cm^*Xm + Cn^*Xn.. + I)^*Service2...$$

Here the Coefficients C1 to Cn as well as constants k and I are distinct values which are already known from the partly evaluation of the set of equations. X1 to Xn in this embodiment are the dynamic context information pieces which at this time have not yet been available and which will be collected later. The partly evaluated equations each of which takes the above form are sent then to the mobile node which will finally evaluate them once it will have received the missing dynamic context information.

The transmission of these partly evaluated equations can be carried out by transmitting (for each equation in the set of equations) only parameters C1 to Cn and constants k and I, e.g. in the form of a matrix, together with information about their meaning (the meaning of the matrix elements). This information about the meaning can be e.g. contained in a header which is also sent to the mobile node together with the matrix. Based on this information in the header the mobile node then knows how to compose the equations, which parameters are still missing and how to insert them into the equations. The header may for example contain the following information: horizontal and vertical dimension of the matrix, an identification which row of the matrix relates to which possible access point, an identification of the available services (thereby identifying the horizontal elements Service1, Service2, etc. of the matrix), and an identification of how many dynamic parameters are still missing to complete the equation. Based on this information the mobile node then - once the still missing dynamic information is received - will know how to fill the missing dynamic context information pieces into the partly evaluated set of equations which has been sent (as partly evaluated context data structure) in advance.

5. Send dynamic network parameters

The context server then sends values of the parameters which are drawn from the dynamic context information in the network to the mobile node. These are the missing context information pieces which are needed to complete the equations sent in step 4. It should be noted that this information is not integrated into the initially sent equations but is sent separately because it is dynamic. This dynamic information may change quickly (e.g. the network load); and therefore it may be out of date soon, if it is collected and sent too early. By sending this information later it can be made sure that it is up-to-date. It may for example be sent upon a specific request from the mobile node just before the decision is to be made. Another alternative would be to continuously collect and send the dynamic context information to the mobile node. The dynamic context information pieces then are filled into the partly evaluated set of equations which has been sent to the mobile node in advance.

6. Fill in dynamic context from mobile node

After having filled the dynamic context information from the network side into the equations, the mobile node fills in the dynamic context information from the mobile node itself and evaluates the resulting equations to take a decision. The dynamic context information from the mobile node here relates to the service which is currently under operation in the mobile node. In order to give the user the chance to alter the service currently used up to just until the handover is made, this dynamic context information from the mobile is the context information which is filled in last to complete the set of equations. For that purpose, with respect to the context information pieces in the set of equations which correspond to the availability or non-availability of a certain service (e.g.Service1, Service2,...), the context information piece ServiceX which corresponds to the currently operated service is set to "1" and all others (Service 1, Service2,.., except ServiceX) are set to "0."

7. Evaluate equations

With the set of equations to be evaluated now finally having been completed, the mobile node makes the decision based on the calculation results of the set of equations (the context data structure).
In connection with the described procedure the following should be noted.

> 1) When the static context information in the mobile node changes (e.g., if the user installs a new service, or if the user change the profile), then step 1 to step 7 are to be repeated.

> 2) When the static context information in the network changes (e.g., a new access point becomes available, or if the network capabilities changes), then step 2 to step 7 should be repeated.

> 3) When the dynamic context information in the network changes (e.g., if the change of traffic load in the AP exceeds some threshold), then step 5 to step 7 should be repeated.

> 4) When the dynamic context information in the mobile node changes (e.g., mobile node switches from one service to another, e.g. from audio communication to video conference, or if the change of signal strength in the AP exceeds some threshold), then step 6 to step 7 should be repeated.

According to the foregoing embodiment there is composed a set of equations based on initial context information. This set of equations depends with respect to the parameters and operands (which may be regarded as "further context information") on the initial context information. Furthermore it is "minimized" or limited to "relevant" context information based on initial context information, e.g. based on available services and neighboring access points, as was explained in connection with step 3a. The minimization reduces the necessary traffic when a set of equations is to be sent from the context server to the mobile node. This is advantageous because the wireless link is the bottleneck for the information exchange between the mobile mode and the network and its elements, and therefore such traffic should be minimized. Moreover, the limitation to relevant context information also reduces the necessary calculations on the side of the mobile node for evaluation of the equations. The composition and evaluation of the context information to make a context-aware network service decision thereby becomes particularly flexible and can adapt well to a changing environment.
The set of equations to be evaluated can be represented by a matrix consisting of the context information pieces used for forming the set of equations which are to be evaluated. This matrix may then be sent from the context server to the mobile node. If the set of equations is represented by a matrix and sent to the mobile node in form of such a matrix, then in order to compose or retrieve the actual equations represented by said matrix consisting of the context information pieces, there is also provided some additional information defining how to compose the set of equations to be evaluated based on said matrix. This can be realized by additional information (e.g. a header) defining (and informing the mobile node about) the meaning of the matrix elements. An alternative could be that there is an agreement or convention between the mobile node and the context server about how to interpret the matrix elements sent from the context server to the mobile node so that the equations can be retrieved correctly and that the dynamic information can be filled in at the right position. A further alternative could be to use a combination of both, a header and some convention which was agreed upon..

The partial evaluation of the set of equations based on static context information reduces the necessary traffic between the mobile node and the context server. Moreover, sending the dynamic context information at a later stage makes sure that the context information is up to date when the (final) evaluation is carried out. This can be done upon a specific request from the mobile node, or the updating can be carried out continuously.

The separate collection of dynamic and static context information has the effect that the actual set of context information which is collected and then to be used for composing the set of equations to be evaluated varies in an adaptive manner depending on the circumstances and the environment. In case of the context information including dynamic context information according to a certain embodiment this dynamic context information is not included but rather excluded when composing the (initial) context data structure. Thereby the (initial) context data structure is minimized based on the circumstances, namely based on the fact that dynamic context information is to be taken into account for which it is desirable to include it at a latter stage to make sure that it is up-to-date.

E.g. at a moment when the dynamic context information is needed (e.g. just before taking a decision) the corresponding set of dynamic context information pieces is collected and then inserted into the context data structure to thereby obtain a (final) context data structure. The dynamic context information thereby may be collected continuously by the context server (and then being sent to the context client on request), or it may be collected by the context server on request from the context client.

With respect to the foregoing particular embodiment, several variations may be contemplated.

While in the foregoing embodiment the context client triggers the procedure, according to one variation, in step 1 above, the context server or some other entity may trigger the whole procedure.

According to a further variation and as mentioned already with respect to the dynamic context information, in step 2, the context server continuously collects context information.

According to still a further variation, additional rules or conditions are considered which assign values to parameters. Some parameters (P1, P2, etc.) may depend on a case distinction. For instance, "if Service1 = 0 then P1 = 0". This can express that Service1 has an impact on other service parameters. These rules have to be evaluated before composing the equations.

According to a further variation the set of equations may be updated by adding or removing equations for some APs, typically if the location context changes.

According to a further variation, if some parameters are not available when a decision is to be taken, then default values can be taken for unknown parameters.

In the following a further embodiment according to the present invention will be described in somewhat more detail. In particular, in the following embodiment distinct examples will be given for the context information pieces and their values used for composing the set of equations and evaluating them for making a decision.

The embodiment described in the following also relates to a framework for context-aware handover. Similar to the foregoing embodiments, suppose we have a mobile node controlled handover. The mobile node wants to handover to an optimum AP based on the context information from both the network and the mobile node. In the following two different scenarios will be described.

Scenario 1:

In the mobile node, the static context information is: The hardware is a notebook, which can support two services: video conference and data communication (This is hardware dependent static context information). Further context information may be: I always prefer the highest quality of my communication and do not care about the price (This is static context information resulting from user settings or user preferences). Further context information in this example is: "I am traveling in a train currently". This may result from a location server or location repository providing this context information.

Assume further that the sub-network where the mobile node is currently located supports both video conference and data communication. Furthermore, a location prediction server is available to offer some location prediction information. Assume further that a traffic monitor is available to monitor the traffic load of different APs.

In the following the detailed procedure of context-aware handover is described:

1. The mobile node sends a request for context-aware handover to the context server. The request includes its static context information.

2. The context server receives the request. To support the context-aware handover, it fetches the relevant context information from the context repository. By sending the current access point AP (e.g., AP1) of the mobile node MN and the profile "I am in a train currently" to the location prediction server, it gets a preference list of APs (AP2 = 2; AP3 =1) based on the location prediction. This location prediction information indicates the likelihood that the mobile node will move to a certain next access point. A location prediction information server which provides such kind of information is already known in the art, it therefore is not described here in detail.

3. The context server then composes the set of equations as follows:

a) APx = (C1*P1+C2*P2+C3*P3)*video + (C4*P1+C5*P2+C6*P3)*data Here P1 is the available bandwidth, P2 is the received signal strength from this AP, P3 is the location preference for the access point APx. A corresponding equation is composed for each possible (realistic) prospective access point, as has been already described before. Assume here that the (neighboring) and therefore realistic future access points are AP2 and AP3.

b) The value of the coefficients C1, C2, C3, C4, C5, C6 can be decided by the network policy and user preference. Since the user in this example has higher preference on communication quality, we suppose C1 and C4 should be bigger than C2, C3, C5 and C6. Since for video service, bandwidth is more critical, C1 should be bigger than C4. In this example we suppose C1=1.2, C4=1.1, C2=C3=C5=C6=1. The actual values may be taken by referring to a lookup table based on the user preferences set in the mobile node and based on the network policy. The final set of equations then is:

$$AP2 = (1.2*P1 + P2+P3)*video + (1.1*P1 + P2+P3)*data$$

$$AP3 = (1.2*P1 + P2+P3)*video + (1.1*P1 + P2+P3)*data$$

c) suppose the bandwidth capability both in AP2 and AP3 is 3, then the result matrix is:

$$AP2 = (1.2*(3-load2)+P2+1)*video + (1.1*(3-load2)+ P2+1)*data$$

$$AP3 = (1.2*(3-load3)+P2+2)*video + (1.1*(3-load3)+ P2+2)*data$$

Load2 and load3 here are the loads of AP2 and AP3, respectively. It should be noted that the parameters should be normalized before being inputted into the equations.

4. The context server sends the set of equations to the mobile node.

5. Being aware of the nearby APs of AP1 (AP2. AP3), the context server requires the traffic load information of the nearby APs (load1 = 1, load2 = 2) from the traffic monitor as the missing dynamic context information from the network side. The context server sends load2=1, load3=2 to the mobile node after sends the evaluation matrix. (Note that update of this information will be sent whenever the network load changes)

6. Suppose the mobile node is having a video conference at that time, then video =1, data =0. Suppose the signal strength is 2 for AP2 and 1 for AP3.

Then the resulting equations are:

$$AP2 = (1.2*(3-1)+ 2+1)*1+(1.1*(3-1)+ 2+1)*0 = 5.4$$

$$AP3 = (1.2*(3-2)+1+2)*1+(1.1*(3-2)+1+2)*0 = 4.2$$

7. From the calculation results, the mobile node makes the decision to take AP2 as the next access point.

Scenario 2:

Now a second example will be described. The main differences to the above example are

- The terminal capability is different
- The supported services in the mobile node and the network are different
- The user preference is different, more focus on low charge
- Different parameters are considered

In the mobile node, the static context information is: "My hardware is a mobile phone", "it can support only audio communication and SMS". "I want to minimize the cost as much as possible".
The sub-network where the mobile node is supports video communication, audio communication and data communication. A charging server is available to offer price information of different services. Furthermore, a traffic monitor is available to monitor the traffic load of different AP.
In the following the detailed procedure of context-aware handover is described:

1. The mobile node sends a request for context-aware handover to the context server. The request includes its static context information.

2. The context server receives the request. To support the context-aware handover, it fetches the relevant context information from the context repository. By inquiring the charging server with the required services, it gets a preference list of APs (for audio communication AP2 = 2, AP3 =3; for SMS AP2=AP3=1).

3. The context server then composes the set of equations (for the access points Apx) as follows:

a) $AP\ x = (C1*P1+C2*P2+C3*P3)*audio + (C4*P1+C5*P2+C6*P3)*SMS$

Here P1 is the available bandwidth, P2 is the received signal strength from this AP, P3 is the price preference.

b) The coefficients C1, C2, C3, C4, C5, C6 can be decided by the network policy and the user preference. Since in this case the user gives a higher priority to low cost, in this example C3 and C6 should be bigger than C1, C2, C4 and C5. Since for audio communication, bandwidth is more critical, C1 should be bigger than C4. Based on this the coefficient values are assumed to be C1=1.2, C4=1.1, C2=C5=1, C3=C6=2. The final set of equations then is:

$$AP2 = (1.2*P1+ P2+2*P3)*audio + (1.1*P1+ P2+2*P3)*SMS$$

$$AP3 = (1.2*P1+ P2+2*P3)*audio + (1.1*P1+ P2+2*P3)*SMS$$

c) suppose the bandwidth capability both in AP2 and AP3 is 3, then the result matrix is:

$$AP2 = (1.2*(3-load2)+P2+2*2)*audio + (1.1*(3-load2)+ P2+2*1)*SMS$$

$$AP3 = (1.2*(3-load3)+P2+2*3)*audio + (1.1*(3-load3)+ P2+2*1)*SMS$$

4. The context server sends the equations to be evaluated to the mobile node.

5. Being aware of the neighboring APs (AP2, AP3), the context server requires the traffic load information of the neighboring APs (load2 = 2, load3 = 1) from the traffic monitor. The context server sends load2=2, load3=1 to the mobile node after having sent the evaluation matrix.

6. Suppose mobile node is currently having an audio communication at that time, then audio =1, SMS =0. Suppose further the signal strength is 2 for AP2 and 1 for AP3. Then the resulting equations are:

$$AP2 = (1.2*(3-2)+2+4)*1 = 7.2$$

$$AP3 = (1.2*(3-1)+1+6)*1 = 9.4$$

7. From the calculation results, the mobile node makes the decision to take AP3 as the next access point.

In the following now a still further embodiment according to the present invention will be described. This embodiment relates to context aware paging.

In principle there are two strategies for paging process. One is the so-called blanket polling, in which the network sends the paging signal to all the cells in one paging area simultaneously. The other paging strategy is called sequential paging. In this case the network sends the paging signal to the cells in one paging area sequentially in descent order depending on the possibility or the likelihood of the mobile node's location being in a certain cell. In the second strategy, the network needs to decide which cell in a paging area is to be paged first. Therefore a similar decision procedure as described in connection with the previous embodiments needs to be carried out. In the present embodiment each equation to be composed defines the likelihood of a user being in a certain cell. Thereby, for example, the set of equations can be composed as follows:

$$AP x = C1*P1+C2*P2+C3*P3$$

Here P1 is the received signal strength from this AP (AP x), P2 a parameter reflecting the user history (e.g., the frequency of the user to be in this cell, this parameter may e.g. be retrieved from a context repository), P3 is a parameter reflecting the location preference based on movement prediction (e.g. carried out by and retrieved from a location prediction server). C1, C2, C3 are coefficients which can be decided by the network policy and/or user preference in a manner which has been described in connection with the previous embodiments.

Since the paging process is service independent, the equations are simplified compared to the service dependent equations described in connection with the previous embodiments. The collection of the context information pieces and their composition into the set of equations to be evaluated to make the decisions, however, is similar to the procedure described previously in connection with the other embodiments and a detailed description will therefore be omitted here. The minimization of the context data structure may be carried out similar to the previous embodiments, e.g. certain access points may be excluded as unrealistic, e.g. based on user history, or the like. Therefore, some context information elements may be included and some may not, depending on initial context information, thereby minimizing the context data structure like already described in the previous embodiments.

There has been described an approach which specifies the architecture of a context management framework and a context data structure which may e.g. be a set of context equations or a context matrix. The framework intends to achieve an optimum decision on a certain network service such as a selection of an access point AP, or the selection of a cell for paging. It further in a certain embodiment achieves a minimum information exchange. The framework may include not only the static context information in the network and mobile node, but also the dynamic context information in the network and mobile node. A detailed procedure of context collection, a composition of context data structures, update, exchange and processing of context information has described with which an effective and flexible context processing can be achieved.

**Claims**

1.   A method for making a context-based decision on a service in a mobile network, said method comprising:

collecting (300) context information which is distributed over separate locations in said mobile network;

composing (320) a context data structure including context information for reaching a decision on said service based on an evaluation of said context data structure, **characterised in that** said context data structure is minimized and said minimizations (400) of said context data structure includes:

partly evaluating said context data structure based on available static context information, said method further comprising:

transmitting said context data structure from a first location (250) to a second location (220, 230) and wherein

dynamic context information is transmitted separate from said context data structure and is either continously updated or is updated on request just before the evaluation of said context data structure.

2. The method of claim 1, wherein said context data structure is minimized, and wherein said context data structure takes the form of a matrix, said method comprising:

composing said matrix in a minimized form and/or
minimizing said matrix after having initially composed said matrix.

3. The method of one of claims 1 or 2, wherein
said minimization of said context data structure includes:

deciding which context information pieces are relevant for reaching the decision based on initial context information to include only the relevant context information pieces in composing said context data structure, and/or excluding dynamic context information when composing said context data structure.

4. The method of one of the preceding claims, wherein
said minimization of said context data structure comprises:

deciding based on initial context information which access points among the plurality of access points in said mobile network should be considered as prospective access points;
including only those elements into the context data structure which correspond to the access points which should be considered based on said decision, wherein
only those elements which correspond to access points of neighboring cells adjacent to the present cell in which the mobile terminal is currently located are considered as relevant and included into the context data structure.

5. The method of one of claims 1 to 4, wherein
said minimization of said context data structure comprises:

deciding based on service-related context information which services in said mobile network should be considered as relevant;
including only those elements into the context data structure which correspond to the services which should be considered as relevant based on said decision.

6. The method of one of claims 1 to 5, wherein said minimization comprises:

excluding dynamic context information when initially composing said context data structure based on static context information; and wherein
said dynamic context information is included into said context data structure after said static context information.

7. The method of one of the preceding claims, wherein
said mobile environment includes a context server, a plurality of context repositories, and a plurality of mobile nodes as context clients;
said context server collects said context information from said context repositories and composes said context evaluation matrix;
said context data structure is transmitted from said context server to one of said context clients for evaluation.

8. The method of one of claims 1 to 7, wherein
the context information includes static information and dynamic information from the mobile terminal and the network, and wherein;
said context data structure is initially composed based on static context information, and
dynamic context information from said network side is inserted after having initially composed said context data structure; and
dynamic information from said mobile terminal is finally inserted into said context data structure just before evaluation of said context data structure.

**9.** The method of one of claims 1 to 8, wherein
said context information describes aspects of the present status of said network and/or its components and/or its users, wherein
said context data structure is a matrix which represents a set of n equations, said n equations being respectively for calculating a rank $R_n$ defining the priority with which an option On is to be selected among different possible options.

**10.** The method of one of the preceding claims, wherein
said context information relates to one or more of the following:

> user profile;
> user history;
> network location and/or network topology;
> network capabilities;
> network services;
> charging models;
> potential next access points;
> location information;
> location prediction.

**11.** The method of one of the preceding claims, wherein
the network service on which a decision is to be made is paging, and wherein the decision relates to the question which cell or cells are to be paged next.

**12.** An apparatus (250) for making a context-based decision on a service in a mobile network, said apparatus comprising:

> a collector component for collecting context information which is distributed over separate locations (200) in said mobile network;
> a composing component for composing a context data structure including context information for reaching a decision on said service based on the evaluation of said context data structure, **characterised by** means for minimization of said context data structure, wherein said apparatus for minimization of said context data structure includes:

>> means for partly evaluating said context data structure based on available static context information,
>> means for transmitting said context data structure from a first location (250) to a second location (220, 230) and adapted so that
>> dynamic context information is transmitted separate from said context data structure and is either continuously updated or is updated on request just before the evaluation of said context data structure.

**13.** The apparatus of claim 12, wherein said context data structure takes the form of a matrix and
said composing component is adapted to compose said matrix in a minimized form or to minimize said matrix after having initially composed said matrix.

**14.** The apparatus of claim 13, further comprising:

> means for carrying out a method according to one of claims 1 to 11.

**15.** A mobile terminal for a mobile network, said mobile terminal comprising:

> a reception component for receiving a context data structure which has been composed by an apparatus as defined in one of claims 12 to 14;
> a calculation component for evaluating the context data structure which has been received from said apparatus to select one of said options.

16. The mobile terminal of claim 15, wherein said reception component comprises:

a component for receiving a context data structure including static context information;
a component for receiving dynamic context information;
a component for filling said dynamic context information into

said received context data structure.

17. A computer program comprising program code which when being executed on a computer enables said computer to carry out a method according to one of claims 1 to 11.

18. A data structure comprising:

a set of context information elements, said context information elements being arranged into a context data structure for reaching a decision on a service on a mobile network based on the evaluation of said context data structure, wherein said context data structure has been composed by carrying out a method according to one of claims 1 to 11.

**Patentansprüche**

1. Verfahren zum Treffen einer kontextbasierten Entscheidung in einem Dienst in einem Mobilnetz, wobei das Verfahren umfasst:

Sammeln (300) von Kontextinformationen, die auf getrennte Orte in dem Mobilnetz verteilt sind;
Aufbauen (320) einer Kontextdatenstruktur, die Kontextinformationen zum Erreichen einer Entscheidung in dem Dienst auf der Grundlage einer Bewertung der Kontextdatenstruktur enthält;

**dadurch gekennzeichnet, dass**
die Kontextdatenstruktur minimiert ist und das Minimieren (400) der Kontextdatenstruktur umfasst:

teilweises Bewerten der Kontextdatenstruktur auf der Grundlage verfügbarer statischer Kontextinformationen, wobei das Verfahren ferner umfasst:

Senden der Kontextdatenstruktur von einem ersten Ort (250) zu einem zweiten Ort (220, 230), wobei

dynamische Kontextinformationen getrennt von der Kontextdatenstruktur gesendet werden und entweder kontinuierlich aktualisiert oder auf Anforderung direkt vor der Bewertung der Kontextdatenstruktur aktualisiert werden.

2. Verfahren nach Anspruch 1, bei dem die Kontextdatenstruktur minimiert wird und bei dem die Kontextdatenstruktur die Form einer Matrix annimmt, wobei das Verfahren umfasst:

Aufbauen der Matrix in einer minimierten Form und/oder
Minimieren der Matrix, nachdem zunächst die Matrix aufgebaut worden ist.

3. Verfahren nach einem der Ansprüche 1 oder 2, bei dem
das Minimieren der Kontextdatenstruktur umfasst:

Entscheiden auf der Grundlage anfänglicher Kontextinformationen, welche Kontextinformationsteile relevant sind, um die Entscheidung zu erreichen, damit beim Aufbau der Kontextdatenstruktur nur die relevanten Kontextinformationsteile aufgenommen werden, und/oder
Ausschließen dynamischer Kontextinformationen, wenn die Kontextdatenstruktur aufgebaut wird.

4. Verfahren nach einem der vorhergehenden Ansprüche, bei dem das Minimieren der Kontextdatenstruktur umfasst:

Entscheiden auf der Grundlage anfänglicher Kontextinformationen, welche Zugangspunkte unter den mehreren Zugangspunkten in dem Mobilnetz als voraussichtliche Zugangspunkte angesehen werden sollen;
Aufnehmen nur jener Elemente in die Kontextdatenstruktur, die den Zugangspunkten entsprechen, die auf der Grundlage dieser Entscheidung in Betracht gezogen werden sollen, wobei

nur jene Elemente, die Zugangspunkten benachbarter Zellen, die zu der momentanen Zelle benachbart sind, in der das Mobilendgerät sich momentan aufhält, entsprechen, als relevant angesehen werden und in die Kontextdatenstruktur aufgenommen werden.

**5.** Verfahren nach einem der Ansprüche 1 bis 4, bei dem das Minimieren der Kontextdatenstruktur umfasst:

Entscheiden auf der Grundlage von dienstbezogenen Kontextinformationen, welche Dienste in dem Mobilnetz als relevant angesehen werden sollen;
Aufnehmen nur jener Elemente in die Kontextdatenstruktur, die den Diensten entsprechen, die auf der Grundlage dieser Entscheidung als relevant angesehen werden sollen.

**6.** Verfahren nach einem der Ansprüche 1 bis 5, bei dem das Minimieren umfasst:

Ausschließen dynamischer Kontextinformationen, wenn die Kontextdatenstruktur zunächst auf der Grundlage statischer Kontextinformationen aufgebaut wird; wobei

die dynamischen Kontextinformationen in die Kontextdatenstruktur nach den statischen Kontextinformationen aufgenommen werden.

**7.** Verfahren nach einem der vorhergehenden Ansprüche, bei dem
die Mobilumgebung einen Kontext-Server, mehrere Kontext-Ablagen und mehrere Mobilknoten als Kontext-Clients enthält;

der Kontext-Server die Kontextinformationen aus den Kontext-Ablagen sammelt und die Kontextbewertungsmatrix aufbaut;
die Kontextdatenstruktur von dem Kontextserver zu einem der Kontext-Clients für eine Bewertung gesendet wird.

**8.** Verfahren nach einem der Ansprüche 1 bis 7, bei dem
die Kontextinformationen statische Informationen und dynamische Informationen von dem Mobilendgerät und dem Netz enthalten und bei dem
die Kontextdatenstruktur zunächst auf der Grundlage statischer Kontextinformationen aufgebaut wird und dynamische Kontextinformationen von Seiten des Netzes eingefügt werden, nachdem zunächst die Kontextdatenstruktur aufgebaut worden ist; und
dynamische Informationen von dem Mobilendgerät direkt vor der Bewertung der Kontextdatenstruktur schließlich in die Kontextdatenstruktur eingefügt werden.

**9.** Verfahren nach einem der Ansprüche 1 bis 8, bei dem
die Kontextinformationen Aspekte des momentanen Status des Netzes und/oder seiner Komponenten und/oder seiner Anwender beschreiben, wobei
die Kontextdatenstruktur eine Matrix ist, die einen Satz von n Gleichungen repräsentiert, wobei die n Gleichungen jeweils dazu dienen, einen Rang $R_n$ zu berechnen, der die Priorität definiert, mit der eine Option $O_n$ unter verschiedenen möglichen Optionen ausgewählt werden soll.

**10.** Verfahren nach einem der vorhergehenden Ansprüche, bei dem
die Kontextinformationen sich auf ein oder mehrere der folgenden Elemente beziehen:

Anwenderprofil;
Anwenderhistorie;
Netzort und/oder Netztopologie;
Netzfähigkeiten;
Netzdienste;
Kostenbelastungsmodelle;
mögliche nächste Zugangspunkte;
Ortsinformationen;

Ortsvorhersage.

11. Verfahren nach einem der vorhergehenden Ansprüche, bei dem
der Netzdienst, über den eine Entscheidung getroffen werden soll, das Paging ist und bei dem sich die Entscheidung auf die Frage bezieht, welche Zelle oder welche Zellen als Nächstes eine Paging-Operation ausführen sollen.

12. Vorrichtung (250) zum Treffen einer kontextbasierten Entscheidung in einem Dienst in einem Mobilnetz, wobei die Vorrichtung umfasst:

> eine Sammlungskomponente zum Sammeln von Kontextinformationen, die auf getrennte Orte (200) in dem Mobilnetz verteilt sind;
> eine Aufbaukomponente zum Aufbauen einer Kontextdatenstruktur, die Kontextinformationen zum Erreichen einer Entscheidung in dem Dienst auf der Grundlage der Bewertung der Kontextdatenstruktur enthält,

**gekennzeichnet durch**
eine Einrichtung zum Minimieren der Kontextdatenstruktur, wobei die Vorrichtung zum Minimieren der Kontextdatenstruktur umfasst:

> eine Einrichtung zum teilweisen Bewerten der Kontextdatenstruktur auf der Grundlage verfügbarer statischer Kontextinformationen;
> eine Einrichtung zum Senden der Kontextdatenstruktur von einem ersten Ort (250) zu einem zweiten Ort (220, 230), die so beschaffen ist, dass

dynamische Kontextdaten getrennt von der Kontextdatenstruktur gesendet werden und entweder kontinuierlich aktualisiert oder auf Anforderung direkt vor der Bewertung der Kontextdatenstruktur aktualisiert werden.

13. Vorrichtung nach Anspruch 12, bei der die Kontextdatenstruktur die Form einer Matrix annimmt und
die Aufbaukomponente so beschaffen ist, dass sie die Matrix in einer minimierten Form aufbaut oder die Matrix minimiert, nachdem sie die Matrix zunächst aufgebaut hat.

14. Vorrichtung nach Anspruch 13, die ferner umfasst:

> eine Einrichtung zum Ausführen eines Verfahrens nach einem der Ansprüche 1 bis 11.

15. Mobilendgerät für ein Mobilnetz, wobei das Mobilendgerät umfasst:

> eine Empfangskomponente zum Empfangen einer Kontextdatenstruktur, die durch eine Vorrichtung nach einem der Ansprüche 12 bis 14 aufgebaut worden ist;
> eine Berechnungskomponente zum Bewerten der Kontextdatenstruktur, die von der Vorrichtung empfangen worden ist, um eine der Optionen auszuwählen.

16. Mobilendgerät nach Anspruch 15, bei dem die Empfangskomponente umfasst:

> eine Komponente zum Empfangen einer Kontextdatenstruktur, die statische Kontextinformationen enthält;

> eine Komponente zum Empfangen dynamischer Kontextinformationen;
> eine Komponente zum Einfügen der dynamischen Kontextinformationen in die empfangene Kontextdatenstruktur.

17. Computerprogramm, das Programmcode enthält, der dann, wenn er auf einem Computer ausgeführt wird, den Computer in die Lage versetzt, ein Verfahren nach einem der Ansprüche 1 bis 11 auszuführen.

18. Datenstruktur, die umfasst:

> einen Satz von Kontextinformationselementen, wobei die Kontextinformationselemente in einer Kontextdatenstruktur angeordnet sind, um eine Entscheidung über einen Dienst in einem Mobilnetz auf der Grundlage der Bewertung der Kontextdatenstruktur zu erreichen, wobei die Kontextdatenstruktur durch Ausführen eines Verfahrens nach einem der Ansprüche 1 bis 11 aufgebaut worden ist.

**Revendications**

1. Procédé permettant de prendre une décision contextuelle sur un service dans un réseau mobile, ledit procédé comprenant :

   la récupération (300) des informations contextuelles qui sont réparties sur des emplacements séparés dans ledit réseau mobile ;
   la constitution (320) d'une structure de données contextuelles comprenant des informations contextuelles pour atteindre une décision sur ledit service basée sur une évaluation de ladite structure de données contextuelles ;

   **caractérisé en ce que** ladite structure de données contextuelles est minimisée et ladite minimisation (400) de ladite structure de données contextuelles comprend :

   l'évaluation partielle de ladite structure de données contextuelles basée sur des informations contextuelles statiques disponibles, ledit procédé comprenant en outre :

   la transmission de ladite structure de données contextuelles à partir d'un premier emplacement (250) vers un second emplacement (220, 230), et dans lequel

   les informations contextuelles dynamiques sont transmises séparément de ladite structure de données contextuelles et sont soit mises à jour de manière continue soit mises à jour sur demande juste avant l'évaluation de ladite structure de données contextuelles.

2. Procédé selon la revendication 1, dans lequel ladite structure de données contextuelles est minimisée, et dans lequel ladite structure de données contextuelles prend la forme d'une matrice, ledit procédé comprenant :

   la constitution de ladite matrice sous une forme minimisée et/ou
   la minimisation de ladite matrice après avoir constitué initialement ladite matrice.

3. Procédé selon l'une des revendications 1 ou 2, dans lequel
   ladite minimisation de ladite structure de données contextuelles comprend :

   la décision de quelles parties d'informations contextuelles sont pertinentes pour atteindre la décision basée sur les informations contextuelles initiales pour comprendre seulement les parties d'informations contextuelles pertinentes lors de la constitution de ladite structure de données contextuelles, et/ou
   l'exclusion des informations contextuelles dynamiques lors de la constitution de ladite structure de données contextuelles.

4. Procédé selon l'une des revendications précédentes, dans lequel
   ladite minimisation de ladite structure de données contextuelles comprend :

   la décision basée sur les informations contextuelles initiales dont les points d'accès parmi la pluralité de points d'accès dans ledit réseau mobile devraient être considérés comme des points d'accès potentiels ;
   l'inclusion de seulement ces éléments dans la structure de données contextuelles qui correspondent aux points d'accès qui devraient être considérés comme basés sur ladite décision, dans laquelle

   seuls ces éléments qui correspondent aux points d'accès des cellules voisines adjacentes à la cellule actuelle dans laquelle le terminal mobile est actuellement situé sont considérés comme pertinents et compris dans la structure de données contextuelles.

5. Procédé selon l'une des revendications 1 à 4, dans lequel
   ladite minimisation de ladite structure de données contextuelles comprend :

   la décision basée sur les informations contextuelles liées aux services des services dans ledit réseau mobile qui devraient être considérés comme pertinents ;
   l'inclusion de seulement ces éléments dans la structure de données contextuelles qui correspondent aux services qui devraient être considérés comme pertinents sur la base de ladite décision.

**6.** Procédé selon l'une des revendications 1 à 5, dans lequel ladite minimisation comprend :

l'exclusion des informations contextuelles dynamiques lors de la constitution initiale de ladite structure de données contextuelles basée sur des informations contextuelles statiques ; et dans lequel

lesdites informations contextuelles dynamiques sont comprises dans ladite structure de données contextuelles après lesdites informations contextuelles statiques.

**7.** Procédé selon l'une des revendications précédentes, dans lequel
ledit environnement mobile comprend un serveur contextuel, une pluralité de référentiels contextuels, et une pluralité de noeuds mobiles comme clients contextuels ;
ledit serveur contextuel recueille lesdites informations contextuelles à partir desdits référentiels contextuels et constitue ladite matrice d'évaluation contextuelle ;
ladite structure de données contextuelles est transmise à partir dudit serveur contextuel vers l'un desdits clients contextuels pour évaluation.

**8.** Procédé selon l'une des revendications 1 à 7, dans lequel
les informations contextuelles comprennent des informations statiques et des informations dynamiques à partir du terminal mobile et du réseau, et dans lequel ;
ladite structure de données contextuelles est constituée initialement sur la base des informations contextuelles statiques, et
les informations contextuelles dynamiques à partir dudit côté du réseau sont insérées après avoir constitué initialement ladite structure de données contextuelles ; et
les informations dynamiques à partir dudit terminal mobile sont insérées finalement dans ladite structure de données contextuelles juste avant l'évaluation de ladite structure de données contextuelles.

**9.** Procédé selon l'une des revendications 1 à 8, dans lequel
lesdites informations contextuelles décrivent les aspects de l'état actuel dudit réseau et/ou de ses composants et/ou de ses utilisateurs, dans lequel
ladite structure de données contextuelles est une matrice qui représente un ensemble de n équations, lesdites n équations servant respectivement à calculer un rang $R_n$ définissant la priorité avec laquelle une option $O_n$ doit être choisie parmi plusieurs options possibles.

**10.** Procédé selon l'une des revendications précédentes, dans lequel
lesdites informations contextuelles se rapportent à l'un ou plusieurs des éléments suivants :

profil utilisateur ;
historique utilisateur ;
emplacement réseau et/ou topologie réseau ;
capacités réseau ;
services réseau ;
chargement modèles ;
points d'accès suivants potentiels ;
informations emplacement ;
prévision emplacement.

**11.** Procédé selon l'une des revendications précédentes, dans lequel
le service réseau sur lequel la décision doit être prise est averti, et dans lequel la décision se rapporte à la question de la cellule ou des cellules à avertir ensuite.

**12.** Dispositif (250) pour prendre une décision contextuelle sur un service dans un réseau mobile, ledit dispositif comprenant :

un composant de récupération pour récupérer des informations contextuelles qui sont réparties sur des emplacements séparés (200) dans ledit réseau mobile ;
un composant de constitution pour constituer une structure de données contextuelles comprenant des informations contextuelles pour atteindre une décision sur ledit service basée sur une évaluation de ladite structure de données contextuelles, **caractérisé par** des moyens pour la minimisation de ladite structure de données contextuelles, dans laquelle ledit dispositif pour la minimisation de ladite structure de données contextuelles comprend :

des moyens pour évaluer partiellement ladite structure de données contextuelles basée sur des informations contextuelles statiques disponibles,

des moyens pour transmettre ladite structure de données contextuelles à partir d'un premier emplacement (250) vers un second emplacement (220, 230), et adaptés de manière à ce que

les informations contextuelles dynamiques soient transmises séparément à partir de ladite structure de données contextuelles et soient mises à jour de manière continue ou mises à jour sur demande juste avant l'évaluation de ladite structure de données contextuelles.

13. Dispositif selon la revendication 12, dans lequel ladite structure de données contextuelles prend la forme d'une matrice et

ledit composant de constitution est adapté pour constituer ladite matrice sous une forme minimisée ou pour minimiser ladite matrice après avoir constitué initialement ladite matrice.

14. Dispositif selon la revendication 13, comprenant en outre :

des moyens pour mettre en oeuvre un procédé selon l'une des revendications 1 à 11.

15. Terminal mobile pour un réseau mobile, ledit terminal mobile comprenant :

un composant de réception pour recevoir une structure de données contextuelles qui a été constituée par un dispositif comme défini dans l'une des revendications 12 à 14;

un composant de calcul pour évaluer la structure de données contextuelles qui a été reçue à partir dudit dispositif pour choisir l'une desdites options.

16. Terminal mobile selon la revendication 15, dans lequel ledit composant de réception comprend :

un composant pour recevoir une structure de données contextuelles comprenant des informations contextuelles statiques ;

un composant pour recevoir des informations contextuelles dynamiques ;

un composant pour intégrer lesdites informations contextuelles dynamiques dans ladite structure de données contextuelles.

17. Programme informatique comprenant un code programme qui, quand il est exécuté sur un ordinateur permet audit ordinateur de mettre en oeuvre un procédé selon l'une des revendications 1 à 13.

18. Structure de données comprenant :

un ensemble d'éléments d'informations contextuelles, lesdits éléments d'informations contextuelles étant disposés dans une structure de données contextuelles pour atteindre une décision sur un service sur un réseau mobile basée sur l'évaluation de ladite structure de données contextuelles, dans lequel ladite structure de données contextuelles a été constituée en mettant en oeuvre un procédé selon l'une des revendications 1 à 11.

## MT Side

### Static Info

User preference (cost, security, bandwidth...)
Hardware capability

### Dynamic Info

Application requirements
Radio measurement
Velocity

## NW Side

### Static Info

Network triggered services
Mobile location
Nearby AP location info
Third part location info
AP capability

### Dynamic Info

Network load

## Decision Algorithm

## Decision

### Fig. 1

_250_
Context Server

_200_

_200_

_270_

_240_
User Profile Repository

_230_
Mobile Node (Context Client)

_210_

_220_
Mobile Node (Context Client)

_240_
Network Traffic Monitor

_240_
Location Info Repository

Fig. 2

collect context information ~300

evaluate initial context information to determine relevant context elements ~310

Compose context data structure based on relevant context elements ~320

Evaluate context data structure for making decision ~330

Fig. 3

Compose minimized initial context data structure ~400

obtain missing context information elements ~410

obtain final context data structure ~420

Fig. 4

Receive initial context information $X_1, X_2, \ldots X_i$ — 510

Apply set of rules to obtain relevant context information $X_{R1}, \ldots X_{RN}$ — 520

Apply set of rules to obtain corresponding further context information — 530

context info. complete? — 540

N

Y

Apply set of rules to compose set of equations — 550

Represent set of equations by a corresponding matrix — 560

Fill in actual values into matrix as far as available — 565

Partly evaluate resulting matrix based on filled in values — 570

Send partly evaluated matrix to mobile node — 575

Retrieve and send missing values to mobile node — 580

Fill in missing values at mobile node — 585

evaluate final matrix — 590

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1217860 A

- US 20020028683 A

### Non-patent literature cited in the description

- **P. CHAN et al.** Mobility management incorporating fuzzy logic of a heterogeneous IP environment. *IEEE Communications Magazine,* December 2001

- **MICHEL KOUNAVIS ; ANDREW CAMPBELL.** Design, implementation and evaluation of programmable handoff. *ACM Journal of Mobile Networks and Applications,* 05 September 2001, vol. 6